# EUROPEAN PATENT APPLICATION

(11) **EP 4 834 740 A1**
(43) Date of publication of application: **04.11.2026**
(21) Application number: 26169139.8
(22) Date of filing: 30.03.2026
(51) Int. Cl.: B62J 27/00, B62J 3/10, B62J 6/00, B62J 45/41, B62J 45/422, B62J 50/22

(54) **BICYCLE PAVEMENT DETECTING DEVICE**

(30) Priority: 29.04.2025 TW 114204294 U
(71) Applicant: Terasilic Co., Ltd., 231 New Taipei City Xindian Dist. (TW)
(72) Inventor: Yu, Shih-an, 231 NEW TAIPEI CITY (TW)
(74) Representative: Petraz, Gilberto Luigi

(57) **Abstract**

A bicycle pavement detecting device (100) includes an image capturing element (110), a warning element (120), and a processing element (130). The image capturing element (110) is adapted to capture an image of a pavement and generate a pavement image. The warning element (120) is adapted to generate a warning signal. The processing element (130) is electrically connected to the image capturing element (110) and the warning element (120). The processing element (130) is adapted to determine whether the pavement image includes an image of a hazardous static structure, and is adapted to trigger the warning element (120) to generate the warning signal when the pavement image includes the image of the hazardous static structure.

## Description

### CROSS-REFERENCE TO RELATED APPLICATION

This application claims the priority of Taiwan application No. 14204294, filed on April 29, 2025. The entirety of the above-mentioned patent application is hereby incorporated by reference herein and made a part of this specification.

### FIELD OF THE DISCLOSURE

The present disclosure relates to a pavement detecting device, and more particularly to a bicycle pavement detecting device.

### BACKGROUND OF THE DISCLOSURE

Bicycles offer advantages such as environmental friendliness, ease of parking, and high maneuverability, while also providing health and fitness benefits, making them well-suited for short-distance commuting. Currently, electrically powered bicycles have been developed in the market. Compared to traditional bicycles, electric bicycles allow to ride with less effort and offer higher riding speeds, thereby enabling longer riding distances and a more comfortable riding experience.

However, regardless of traditional or electric bicycles, the rim of the bicycle is significantly narrower than that of cars or motorcycles. As a result, the tire width of a bicycle is substantially smaller than that of car or motorcycle tires, which leads to reduced traction and stability. Furthermore, the bicycle frame offers virtually no protection to the rider, such that even minor foreign objects or surface irregularities on the road may cause serious accidents during bicycle riding.

### SUMMARY OF THE DISCLOSURE

The present disclosure provides a bicycle pavement detecting device for reducing a likelihood of bicycle accidents.

To achieve one, some, or all of the aforementioned purposes or other purposes, an embodiment of the present disclosure provides a bicycle pavement detecting device including an image capturing element, a warning element, and a process element. The image capturing element is adapted to capture an image toward a pavement and to generate a pavement image. The warning element is adapted to generate a warning signal. The processing element is electrically connected to the image capturing element and the warning element. The processing element is adapted to determine whether the pavement image includes an image of a hazardous static structure. The processing element is adapted to trigger the warning element to generate the warning signal when the pavement image includes the image of the hazardous static structure.

In an embodiment of the present disclosure, the processing element is adapted to determine whether a size of the hazardous static structure is greater than a threshold size, and the processing element is adapted to trigger the warning element to generate the warning signal when the size of the hazardous static structure is greater than the threshold size.

In an embodiment of the present disclosure, the warning element includes a sound generating component or a vibration component.

In an embodiment of the present disclosure, the warning element includes a display component which is adapted to receive and display the pavement image.

In an embodiment of the present disclosure, the warning signal includes an image signal, and the display component is adapted to receive and display the image signal.

In an embodiment of the present disclosure, the bicycle pavement detecting device includes, for example, a fill light, and the fill light is electrically connected to the processing element. The processing element is further adapted to activate the fill light when an ambient light intensity is less than a threshold intensity.

In an embodiment of the present disclosure, the bicycle pavement detecting device further includes an ambient light sensing element. The ambient light sensing element is electrically connected to the processing element and adapted to generate the ambient light intensity.

In an embodiment of the present disclosure, the image capturing element includes a lens, and an optical axis of the lens is parallel to an optical axis of the fill light.

In the present disclosure, the bicycle pavement detecting device utilizes the image capturing element to acquire pavement images. When the analysis of the pavement images indicates the presence of the hazardous static structure, the processing element triggers the warning element to generate the warning signal, thereby promptly alerting the rider to take notice of the pavement and avoid the hazardous static structure. Based on the foregoing, the bicycle pavement detecting device of the present disclosure can effectively reduce the likelihood of bicycle accidents.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

FIG. 1 is a schematic diagram of a bicycle pavement detecting device mounted on a bicycle according to an embodiment of the present disclosure.
FIG. 2 is a schematic block diagram of the bicycle pavement detecting device in FIG. 1.
FIG. 3 is a schematic diagram of a pavement image of the bicycle pavement detecting device in FIG. 1.
FIG. 4 is a schematic block diagram of a bicycle pavement detecting device according to another embodiment of the present disclosure.
FIG. 5 is a schematic block diagram of a bicycle pavement detecting device according to another embodiment of the present disclosure.
FIG. 6 is a schematic diagram of a bicycle pavement detecting device mounted on a bicycle according to another embodiment of the present disclosure.
FIG. 7 is a schematic block diagram of a bicycle pavement detecting device according to another embodiment of the present disclosure.

### DETAILED DESCRIPTION OF PREFERRED EMBODIMENTS

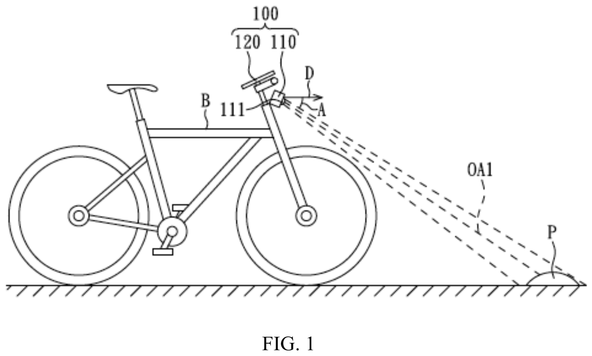

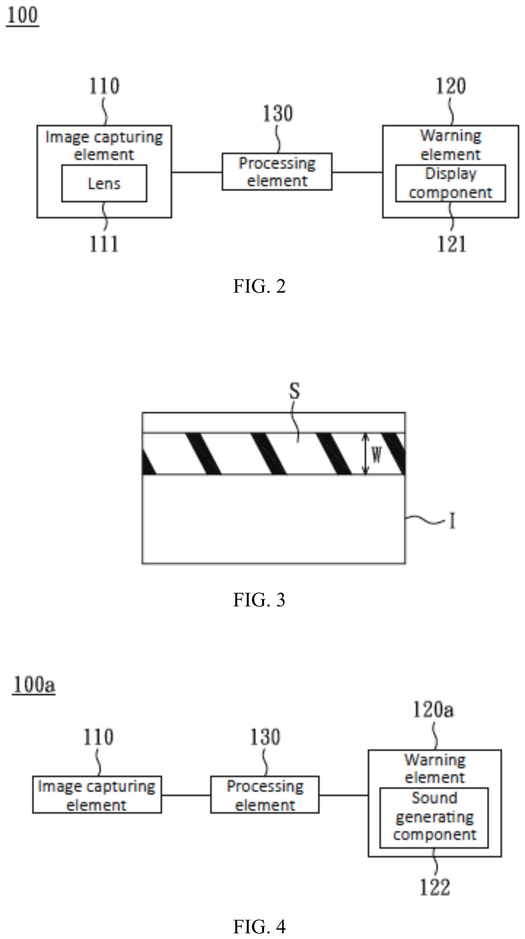

FIG. 1 is a schematic diagram of a bicycle pavement detecting device mounted on a bicycle according to an embodiment of the present disclosure. FIG. 2 is a schematic block diagram of the bicycle pavement detecting device in FIG. 1. FIG. 3 is a schematic diagram of a pavement image of the bicycle pavement detecting device in FIG. 1. As shown in FIG. 1, FIG. 2, and FIG. 3, a bicycle pavement detecting device 100 including an image capturing element 110, a warning element 120, and a processing element 130 is provided. The image capturing element 110 is adapted to capture an image toward a pavement and adapted to generate a pavement image I (as illustrated in FIG. 3). The warning element 120 is adapted to generate a warning signal. The processing element is electrically connected to the image capturing element 110 and the warning element 120. The processing element 130 is adapted to determine whether the pavement image I includes an image of the hazardous static structure S (as illustrated in FIG. 3). Also, the processing element 130 is adapted to trigger the warning element 120 to generate the warning signal when the pavement image includes the image of the hazardous static structure S. In the embodiment, the bicycle pavement detecting device 100 is, for example, mounted on an electric bicycle. However, in another embodiment, the bicycle pavement detecting device 100 may be mounted on a traditional bicycle.

Please refer to FIG. 1 and FIG. 3. In the embodiment, the image capturing element 110 may be mounted on a stem or head tube of the bicycle B. The image capturing element 110 may include a lens 111 (illustrated in FIG. 2), and the lens 111 may be inclined to a riding direction D of the bicycle B so as to obtain the pavement image I. For example, an optical axis OA1 of the lens 111 and the riding direction D of the bicycle B may form a depression angle A of approximately 1 degree to 30 degrees. The depression angle A may be adjusted according to an installation height of the lens 111, a maximum speed of the bicycle B, and a pavement detecting range. For example, in an embodiment, the maximum speed of the bicycle B is estimated to be approximately 15 km/hr, the installation height of the lens 111 is between 0.75 m and 1.1 m, and the depression angle A may range between 2 degrees and 28 degrees. Under these conditions, the lens 111 may capture the pavement image I located within a range of approximately 0.5 to 5 meters from the bicycle B. In another embodiment, the maximum speed of the bicycle B is estimated to be approximately 20 km/hr, the installation height of the lens 111 is between 0.75 m and 1.1 m, and the depression angle A may range between 1.5 degrees and 22 degrees. Under these conditions, the pavement image I within a range of approximately 0.5 to 5 meters from the bicycle B may be obtained in the same manner. In another embodiment, the maximum speed of the bicycle B is estimated to be approximately 25 km/hr, the installation height of the lens 111 is between 0.75 m and 1.1 m, and the depression angle A may range between 1.2 degrees and 18 degrees, such that the pavement image I within a range of approximately 0.5 to 5 meters from the bicycle B may be obtained similarly. It is understood that the lens 111 in the embodiment may be fixed onto a support frame, and the depression angle A toward the pavement may be adjusted by rotating the support frame.

Please refer to FIG. 1, FIG. 2, and FIG. 3. The processing element is able to identify whether the pavement image I includes the image of the hazardous static structure S. The hazardous static structure S may be an uneven structure or stationary object on the road. For example, the hazardous static structure S may include, but is not limited to, manhole covers, drainage grates, cracks, potholes, puddles, steel plates, speed bumps, or stones on the road, and the disclosure is not limited thereto. In the embodiment, the processing element 130 is further adapted to determine a size of the hazardous static structure S present in the pavement image I. When the size of the hazardous static structure S is larger than a threshold size, the warning element 120 is triggered to generate the warning signal for the oversized hazardous static structure S. Accordingly, the rider may timely decelerate or avoid the hazardous static structure S. For example, the processing element 130 detects the hazardous static structure S from the pavement image I shown in FIG. 3 and recognizes the hazardous static structure S as a speed bump P shown in FIG. 1. At this time, the processing element 130 is capable of promptly detecting a width W of the hazardous static structure S and, when the width W exceeds the threshold size, determining that there is a higher probability of an accident involving the bicycle B, thereby triggering the warning element 120 to generate the warning signal. In another embodiment, the warning signal may be generated according to the size of the hazardous static structure rather than the presence of the hazardous static structure. For example, the processing element 130 may detect a height of the speed bump P and compare the detected height with a threshold height for determining whether to trigger the warning element 120 to generate a warning signal. In other embodiments, the processing element 130 may use various parameters such as a width or depth of a pothole, a width or depth of a puddle, a width of a crack, or a diameter of a manhole cover on the road surface as the basis for determining whether to trigger the warning element 120 to generate the warning signal, and the disclosure is not limited to the specific forms of the foregoing parameters. In the embodiment, the processing element 130 may employ a convolutional neural network (CNN) algorithm to identify whether the pavement image I includes the hazardous static structure S. Additionally, the processor may include a central processing unit (CPU) or a microprocessor, and the present disclosure places no particular limitation thereon.

In the embodiment, the warning element 120 may be mounted on the stem or stem cap of the bicycle B to facilitate the rider to aware the warning signal. The warning element 120 may include a display component 121. The display component 121 is adapted to received and display the pavement image I to assist the rider to notice pavement conditions. More specifically, the display component 121 includes, for example, a screen, and the warning signal may include an image signal. The display component 121 is adapted to receive and display the image signal so as to notify the rider of the road conditions through the image signal. For example, when the pavement image I includes the image of the hazardous static structure S, the display component 121 may display the pavement image I and highlight the hazardous static structure S to facilitate the rider to notice the hazardous static structure S.

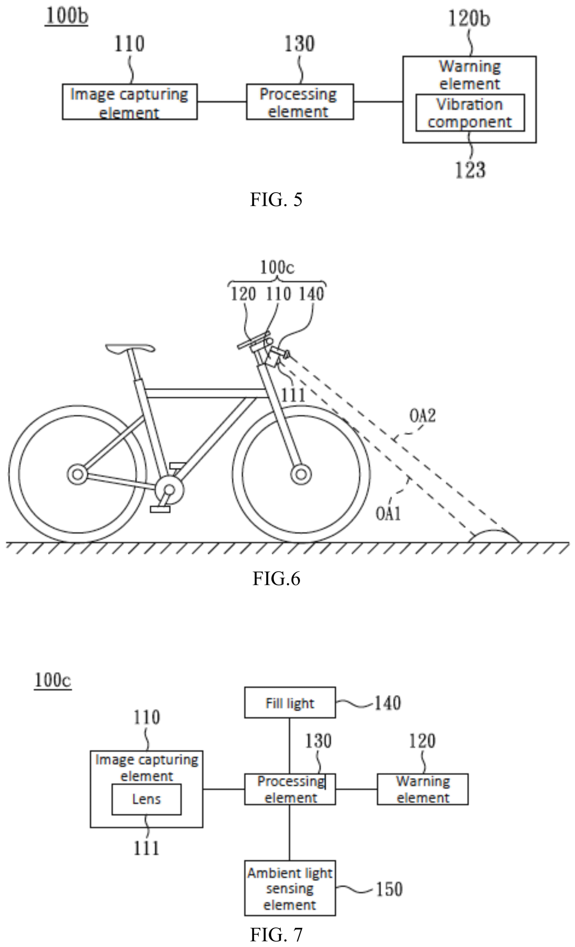

FIG. 4 is a schematic block diagram of a bicycle pavement detecting device according to another embodiment of the present disclosure. FIG. 5 is a schematic block diagram of a bicycle pavement detecting device according to another embodiment of the present disclosure. It is understood that the warning signal is not limited to a form of an image. For example, as shown in FIG.4, a bicycle pavement detecting device 100a is provided with a warning element 120a, which may include, for example, a sound generating component 122. The warning signal includes a sound signal. In another embodiment, as shown in FIG. 5, a bicycle pavement detecting device 100b is provided with a warning element 120b, which may include, for example, a vibration component 123. The warning signal includes a vibration signal. Please refer to FIG. 1 and FIG. 2. In another embodiment, the warning signal may include the display component 121, the sound generating component 122, the vibration component 123, or any combination thereof. The invention is not limited thereto.

In comparison with the prior art, the bicycle pavement detecting device 100 in the embodiment uses the image capturing element 110 to obtain the pavement image I. After finding the hazardous static structure S through analyzing the pavement image I, the processing element 130 triggers the warning element 120 to generate the warning signal so as to promptly remind the rider to notify the pavement and avoid the hazardous static structure S. As mentioned above, the bicycle pavement detecting device 100 in the embodiment is able to effectively reduce the likelihood of accident involving the bicycle B.

Furthermore, in conventional technology, automobile tires are relatively wider and provide greater traction than bicycle tires, thereby allowing automobiles to more stably traverse stationary objects or uneven structures on the road under controlled conditions. Accordingly, driver assistance systems such as adaptive cruise control (ACC), as implemented in automobiles, are generally not designed to detect stationary objects or uneven structures on the pavement. In contrast, bicycle tires are significantly narrower and offer less traction than automobile tires, which increases the likelihood of a bicycle accident when riding over stationary objects or uneven structures on the road. Therefore, the bicycle pavement detecting device 100 is focused on detecting stationary objects or uneven structures on the ground surface, rather than detecting moving objects (e.g., oncoming or preceding vehicles) in the forward direction as in the aforementioned adaptive cruise control systems.

It is further noted that, in the present embodiment, the bicycle pavement detecting device 100 may also be equipped with a radar or LiDAR for more precise detection of stationary objects or uneven structures on the pavement. However, the present disclosure is not limited thereto.

In the embodiment, a bicycle pavement detecting device 100c has structures and advantages similar to those of the embodiment shown in FIG. 1, and only the differences will be described below. Please refer to FIG. 6 and FIG. 7. FIG. 6 is a schematic diagram of a bicycle pavement detecting device mounted on a bicycle according to an embodiment of the present disclosure. FIG. 7 is a schematic block diagram of a bicycle pavement detecting device according to another embodiment of the present disclosure. The bicycle pavement detecting device 110c includes, for example, a fill light 140. The fill light is electrically connected to the processing element 130. The processing element 130 is further configured to activate the fill light 140 when an ambient light intensity is less than a threshold intensity. Specifically, the image capturing element 110 may obtain a clearer pavement image through the illumination of the fill light 140. As a result, the processing element is capable of more accurately determining whether the pavement image includes the image of the hazardous static structure S (illustrated in FIG. 3). For example, in an embodiment, the processing element 130 may activate the fill light 140 when the ambient light intensity is less than 10 lux. However, the disclosure is not limited to any specific value. In the embodiment, the bicycle pavement detecting device 100c may further include an ambient light sensing element 150. The ambient light sensing element 150 is electrically connected to the processing element 130 and is adapted to generate an ambient light intensity. Specifically, the ambient light sensing element 150 may detect a brightness of the ambient light to generate the corresponding ambient light intensity to the processing element 130. The processing element 130 then determines whether to activate the fill light 140 based on the received ambient light intensity. It is further noted that an optical axis OA1 of the lens 111 may be substantially parallel to an optical axis OA2 of the fill light 140, such that light beams emitted from the fill light 140 may precisely illuminate the image capturing range of the lens 111. In one embodiment, an angle between the optical axis OA1 of the lens 111 and the optical axis OA2 of the fill light 140 may be less than 10 degrees, such that the optical axis OA1 of the lens 111 and the optical axis OA2 of the fill light 140 are substantially parallel to each other.

In summary, the bicycle pavement detecting device of the present disclosure utilizes the image capturing element to obtain the pavement images. Upon analyzing the presence of the hazardous static structure in the pavement image, the processing element triggers the warning element to generate the warning signal. This timely alerts the rider to the pavement condition, thereby enabling avoidance of the hazardous static structure. Based on the foregoing, the bicycle pavement detecting device of the present disclosure can effectively reduce the likelihood of bicycle accidents.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A bicycle pavement detecting device (100), comprising:
an image capturing element (110), adapted to capture an image toward a pavement and to generate a pavement image;
a warning element (120), adapted to generate a warning signal; and
a processing element (130), electrically connected to the image capturing element (110) and the warning element (120),
**characterized in that** the processing element (130) is adapted to determine whether the pavement image comprises an image of a hazardous static structure, and is adapted to trigger the warning element (120) to generate the warning signal when the pavement image includes the image of the hazardous static structure.

2. The bicycle pavement detecting device (100) according to claim 1, **characterized in that** the processing element (130) is adapted to determine whether a size of the hazardous static structure is greater than a threshold size, and is adapted to trigger the warning element (120) to generate the warning signal when the size of the hazardous static structure is greater than the threshold size.

3. The bicycle pavement detecting device (100a; 100b) according to claim 1, **characterized in that** the warning element (120a; 120b) comprises a sound generating component (122) or a vibration component (123).

4. The bicycle pavement detecting device (100) according to claim 1, **characterized in that** the warning element (120) comprises a display component (121) which is adapted to receive and display the pavement image.

5. The bicycle pavement detecting device (100) according to claim 4, **characterized in that** the warning signal comprises an image signal, and the display component (121) is adapted to receive and display the image signal.

6. The bicycle pavement detecting device (100) according to claim 1, **characterized in that** the bicycle pavement detecting device (100) further comprises a fill light (140), the fill light (140) is electrically connected to the processing element (130), and the processing element (130) is further adapted to activate the fill light (140) when an ambient light intensity is less than a threshold intensity.

7. The bicycle pavement detecting device (100) according to claim 6, **characterized in that** the bicycle pavement detecting device (100) further comprises an ambient light sensing element (150), and the ambient light sensing element (150) is electrically connected to the processing element (130) and adapted to generate the ambient light intensity.

8. The bicycle pavement detecting device (100) according to claim 6, **characterized in that** the image capturing element (110) comprises a lens (111), and an optical axis of the lens (111) is substantially parallel to an optical axis of the fill light (140).

9. A bicycle pavement detecting device (100), comprising:
an image capturing element (110), adapted to capture an image toward a pavement and to generate a pavement image;
a warning element (120), adapted to generate a warning signal; and
a processing element (130), electrically connected to the image capturing element (110) and the warning element (120),
**characterized in that** the processing element (130) is adapted to determine whether a size of a hazardous static structure present in the pavement image is greater than a threshold size, and is adapted to trigger the warning element (120) to generate the warning signal when the size of the hazardous static structure is greater than the threshold size.
